# EUROPEAN PATENT APPLICATION

(11) **EP 2 175 634 A1**
(43) Date of publication of application: **14.04.2010**
(21) Application number: 09012708.5
(22) Date of filing: 07.10.2009
(51) Int. Cl.: H04N 5/235, H05B 37/02

(54) **Brightness detection system**

(30) Priority: 09.10.2008 JP 2008263054
(71) Applicant: Panasonic Electric Works Co., Ltd., Kadoma-shi Osaka (JP)
(72) Inventor: Tanigawa, Tetsuya, Kadoma-shi Osaka (JP); Matsuda, Shinji, Kadoma-shi Osaka (JP); Kawashima, Toshikazu, Kadoma-shi Osaka (JP)
(74) Representative: Samson & Partner

(57) **Abstract**

A brightness detection system includes an image sensor for generating imaging data formed of pixels, and a calculation unit for finding the brightness of an object by calculating the imaging data. The calculation unit is designed to execute a calculation only for selected arbitrary pixels among the pixels of the imaging data and falling within a preliminarily designated brightness detection range.

## Description

### Field of the Invention

The present invention relates to a brightness detection system for measuring brightness based on the imaging data taken by an image sensor.

### Background of the Invention

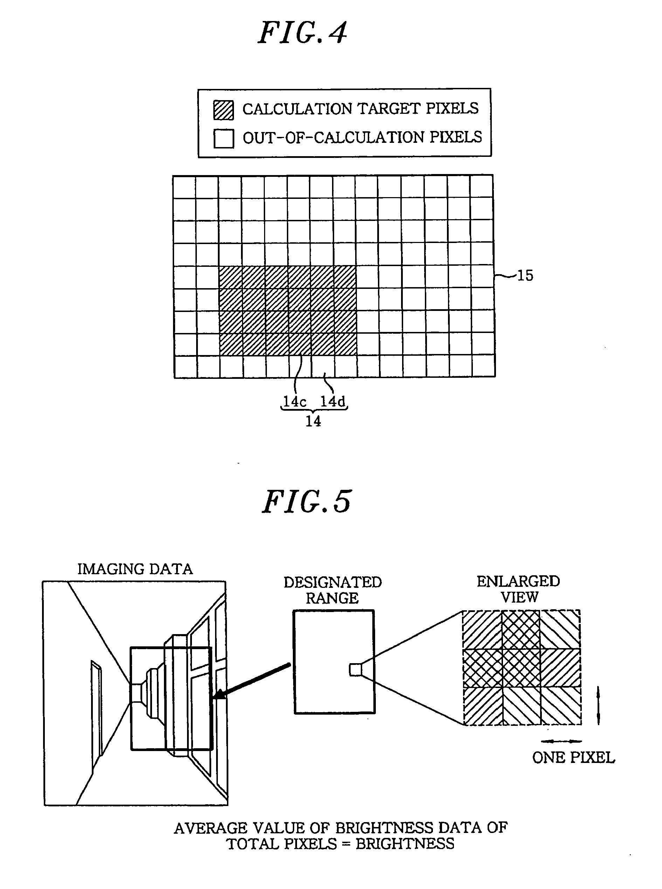

Conventionally, there is known an illumination control system that detects brightness by using an image sensor including a charge-coupled device (see, e.g., Japanese Patent Laid-open Publication No. 2004-501496). One example of imaging data is illustrated in Fig. 5. The imaging data obtained by an image sensor include brightness data corresponding to a multiplicity of pixels. Brightness is detected by calculating an average value of brightness data of the total pixels belonging to a designated brightness detection range among the imaging data. The illumination control system feedback controls an illumination device based on the brightness thus detected.

The average value of brightness data of the total pixels, typically an arithmetic average in the prior art, is calculated by performing a calculation in which the brightness data of the total pixels are added and then divided by the number of the total pixels. This means that the quantity of data to be calculated gets greater as the number of pixels increases. The present inventors have found through researches that a brightness index closer to the human sense and complying with the sense of brightness of a space can be obtained by use of a geometrical average. Depending on the kinds of illumination devices, the geometrical average rather than the arithmetic average is used as the average value of brightness data. As compared to the arithmetic average, however, the quantity of data to be calculated becomes vast in case of the geometrical average. This is because the geometrical average is calculated by multiplying the brightness data of the total pixels and finding the n-th root thereof where the n denotes the number of total pixels. In an illumination device that makes use of an image sensor, it is required that the average value of brightness data be calculated by an embedded microcontroller. Although small in size, the embedded microcontroller is slower in calculation speed than a large-sized computer. For that reason, it is sometimes the case that one hour or more is required for an embedded general-purpose 16-bit microcontroller to calculate a geometrical average from the brightness data of total pixels taken by a one-million-pixel image sensor.

Since the conventional brightness detection system for detecting brightness through the calculation of imaging data taken by the image sensor needs to calculate a vast quantity of data, it suffers from a prolonged calculation time and has a difficulty in feedback controlling an illumination device on a real-time basis. This makes it difficult to combine the brightness detection system with the illumination device.

### Summary of the Invention

In view of the above, the present invention provides an brightness detection system combined with an illumination device for measuring brightness through the calculation of imaging data taken by an image sensor, which is capable of shortening the calculation time and feedback controlling the illumination device on a real-time basis.

In accordance with an aspect of the present invention, there is provided a brightness detection system including an image sensor for generating imaging data formed of pixels; and a calculation unit for finding the brightness of an object by calculating the imaging data, wherein the calculation unit is designed to execute a calculation only for selected arbitrary pixels among the pixels of the imaging data and falling within a preliminarily designated brightness detection range.

With such configuration, the calculation unit performs a calculation only for the selected arbitrary pixels. This reduces the calculated data quantity, thereby shortening the calculation time. Thanks to this feature, it becomes possible to provide a brightness detection system combined with an illumination device, which is capable of performing feedback control on a real-time basis.

Preferably, the selected arbitrary pixels are so selected as not to adjoin to one another on their sides

With such configuration, the calculation unit executes no calculation with respect to the adjoining pixels having substantially the same brightness as that of the calculation target pixels. This makes it possible to calculate the imaging data of broad range while suppressing an increase in the calculated data quantity. Therefore, it is possible to achieve a balance between the reduction of calculated data quantity and the maintenance of calculation accuracy.

The selected arbitrary pixels may have brightness data equal to or greater than a predetermined value.

With such configuration, a calculation is executed only for the pixels whose brightness data are equal to or greater than a predetermined value. In other words, a calculation is performed with respect to the pixels falling within the area affected by external light but no calculation is executed for the pixels falling outside that area. This makes it possible to achieve a balance between the reduction of calculated data quantity and the maintenance of calculation accuracy required in correcting external light.

### Brief Description of the Drawings

Fig. 1A is a block diagram showing a brightness detection system in accordance with a first embodiment of the present invention, and Fig. 1B is a pixel diagram of imaging data in the brightness detection system.
Fig. 2A is a view illustrating a pixel selection example in the brightness detection system and Fig. 2B is a view illustrating another pixel selection example.
Fig. 3 is a block diagram of an illumination device incorporating the brightness detection system.
Fig. 4 is a view showing a pixel selection example in a brightness detection system in accordance with a second embodiment of the present invention.
Fig. 5 is a view illustrating an example of imaging data taken by an image sensor in a conventional illumination control system.

### Detailed Description of the Preferred Embodiments

### (First Embodiment)

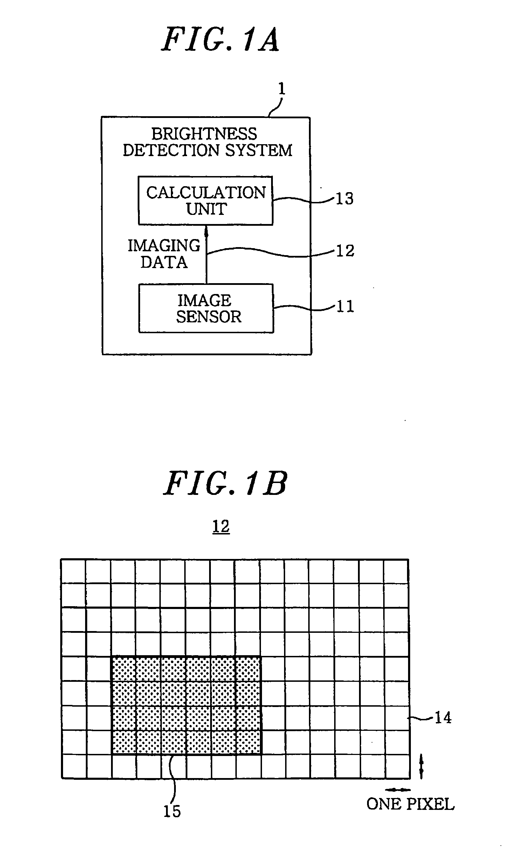

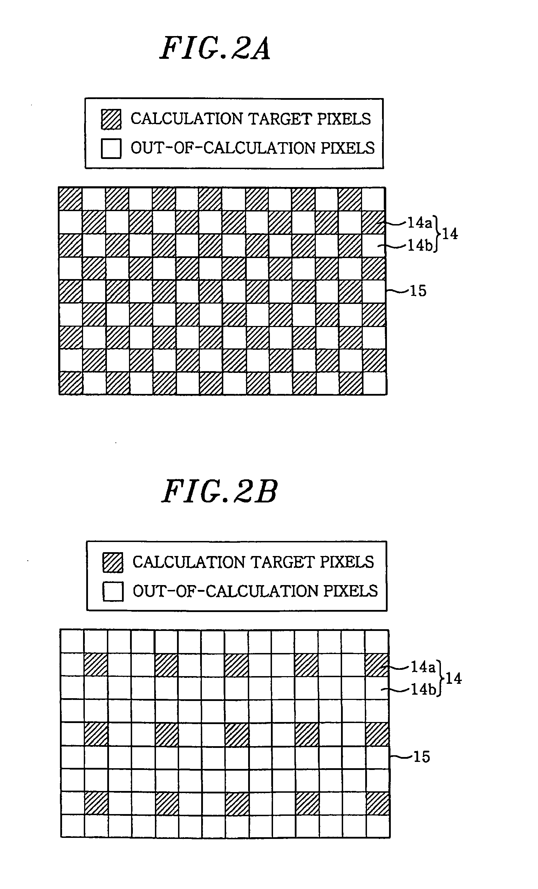

A brightness detection system in accordance with a first embodiment of the present invention will be described with reference to Figs. 1A, 1B, 2A and 2B. Fig. 1A is a block diagram showing the brightness detection system 1 of the present embodiment. The brightness detection system 1 includes an image sensor 11 and a calculation unit 13 for finding the brightness of an object by calculating the imaging data 12 taken by the image sensor 11.

The image sensor 11 includes an imaging element such as a CCD, a CMOS or the like and is designed to output the imaging data 12 by photoelectrically converting the light coming from an object. The calculation unit 13 includes an embedded microcontroller or the like and is configured to find the brightness of an object by calculating the imaging data 12 and to output brightness data.

Fig. 1B shows the configuration of the imaging data 12. The image sensor 11 includes a multiplicity of light-receiving elements. The imaging data 12 includes pixels 14 corresponding to the light-receiving elements, each of the pixels 14 having brightness data (or a Y-value). The pixels 14 have a rectangular shape and are arranged in a lattice pattern. The number of the pixels 14 is not limited to the one illustrated in Fig. 1B in which the pixels 14 are shown in a reduced number for the purpose of description. In reality, the number of the pixels 14 of the imaging data 12 is much greater than illustrated in Fig. 1B (This holds true in case of the pixels shown in Figs. 2A, 2B and 4).

The calculation unit 13 executes a calculation only for the selected arbitrary ones of the total pixels 14 of the imaging data 12 falling within the preliminarily designated brightness detection range (hereinafter abbreviated as detection range) 15.

The detection range 15 refers to the range over which the brightness is to be detected by the brightness detection system 1. The detection range 15 is designated and stored in the microcontroller of the calculation unit 13, e.g., when an illumination device incorporating the brightness detection system 1 is installed in place. The entire imaging area may be designated as the detection range 15.

Figs. 2A and 2B illustrate selection examples of the pixels 14 falling within the detection range 15. Only the pixels 14a (namely, the hatched pixels) are selected from the total pixels 14 falling within the detection range 15. The calculation unit 13 performs a calculation only for the pixels 14a thus selected. No calculation is performed with respect to the non-selected pixels 14b (namely, the non-hatched pixels). That is to say, the selected pixels 14a become the calculation target pixels 14a, while the non-selected pixels 14b become the out-of-calculation pixels 14b. In the present embodiment, the calculation target pixels 14a are so selected that they do not adjoin to one another on their sides. For example, as illustrated in Fig. 2A, the calculation target pixels 14a are so selected that the calculation target pixels 14a and the out-of-calculation pixels 14b can be arranged side by side in an alternating manner vertically and horizontally. Alternatively, as illustrated in Fig. 2B, the calculation target pixels 14a may be selected in a non-alternating pattern but in an equal interval. No restriction is imposed on the selection interval of the calculation target pixels 14a insofar as calculation target pixels 14a do not adjoin to one another on their sides.

The calculation unit 13 obtains the brightness of the detection range 15 by executing a calculation with respect to the selected pixels 14a. The brightness thus obtained is the arithmetic average or the geometrical average of the brightness data of the selected pixels 14a. The results of calculation are outputted as the brightness data of the detection range 15. The calculation time can be shortened by changing the ratio of the calculation target pixels 14a to the out-of-calculation pixels 14b. In an instance where the calculation target pixels 14a and the out-of-calculation pixels 14b are alternately selected (see Fig. 2A), the calculation time becomes one half of the calculation time required in performing a calculation with respect to the total pixels 14 falling within the detection range 15. If the ratio of the calculation target pixels 14a to the out-of-calculation pixels 14b is set equal to 1:9, the calculation time is reduced to one tenth and the calculation speed is increased ten times. In the actual space, there exists no case where all the brightness data of the respective pixels 14 differ from one another, and the mutually-adjoining pixels have substantially the same brightness data. Therefore, the average value of brightness obtained by the calculation shows little change even if the calculation target pixels 14a is reduced to one tenth of the total pixels 14.

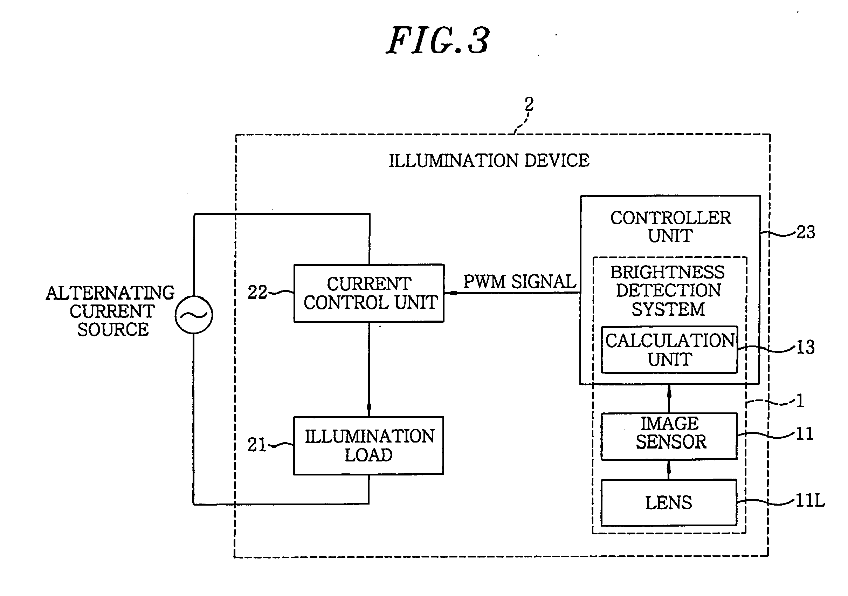

Fig. 3 is a block diagram of an illumination device 2 incorporating the brightness detection system 1 of the present embodiment. The illumination device 1 includes an illumination load 21, a current control unit 22 for dimming the illumination load 21, a brightness detection system 1 and a controller unit 23 responsive to the brightness detected by the brightness detection system for generating a control signal (or a pulse-width-modulation (PWM) signal) to be supplied to the current control unit 22. The illumination load 21 refers to a light source, such as a glow lamp, a fluorescent lamp or a light emitting diode (LED), which can be lighted up by electric power including an alternating current and which can be dimmed by controlling an electric current. The current control unit 22 is a dimming circuit for controlling the load current supplied to the illumination load 21. The load current can be controlled by, e.g., phase control or amplitude control. The brightness detection system 1 includes an image sensor 11, a calculation unit 13 and a lens 11L arranged on the light-receiving side of the image sensor 11. The field of view of the image sensor 11 is determined by the lens 11L. The image sensor 11 takes the image in the field of view and outputs imaging data 12 to the calculation unit 13. The controller unit 23 includes an embedded microcontroller or the like and has the function of the calculation unit 13.

In the illumination device 2 configured as above, the brightness is detected by the brightness detection system 1. The illumination device 2 performs feedback control of reducing the load current if the brightness thus detected is greater than a control target value and increasing the load current if the brightness thus detected is smaller than the control target value. In an installation environment affected by external light, the illumination device 2 performs, through the feedback control, external light correction of reducing a dimming rate if the external light is too bright and increasing the dimming rate if the external light is too dark.

In the brightness detection system 1 of the present embodiment set forth above, the calculation unit 13 performs a calculation only for the selected arbitrary pixels 14a. This reduces the calculated data quantity, thereby shortening the calculation time. Reduction of the calculated data quantity makes it possible to perform the calculation through the use of the embedded microcontroller. Thanks to this feature, it becomes possible to provide a brightness detection system combined with an illumination device, which is capable of performing feedback control on a real-time basis.

The calculation unit 13 executes no calculation with respect to the adjoining pixels having substantially the same brightness as that of the calculation target pixels. This makes it possible to calculate the imaging data 12 of broad range while suppressing an increase in the calculated data quantity. Therefore, it is possible to achieve a balance between the reduction of calculated data quantity and the maintenance of calculation accuracy.

### (Second Embodiment)

A brightness detection system in accordance with a second embodiment of the present invention will be described with reference to Fig. 4. Fig. 4 illustrates one selection example of the pixels 14 falling within the detection range 15 of the brightness detection system. In the following description, the same components as those of the first embodiment will be omitted from description. The brightness detection system of the present embodiment is designed to select the pixels 14c present within a specific area among the pixels 14 of the imaging data 12 and falling within the detection range 15. The calculation unit 13 performs a calculation with respect to the pixels 14c present within the specific area, i.e., the calculation target pixels 14c, but does not execute any calculation for the pixels 14d lying outside the specific area, i.e., the out-of-calculation pixels 14d.

The calculation speed of the calculation unit 13 can be increased by changing the ratio of the calculation target pixels 14c to the out-of-calculation pixels 14d. In the example shown in Fig. 4, the calculation target pixels 14c includes 24 pixels selected from 126 pixels in total. Therefore, as compared to a case where the calculation is executed for the total pixels 14, the calculation time is shortened to 24/126 and the calculation speed is increased by 126/24 times which is the reciprocal of 24/126.

Within the specific area in which the calculation target pixels 14c are selected, the brightness data of the pixels 14c become greater than a predetermined value. For example, the area affected by external light may be preliminarily selected from the detection range 15 by using the imaging data 12, and the pixels 14 falling within that area may be used as the calculation target pixels 14c. Dark objects such as black furniture and black electronic appliances are kept black regardless of the presence or absence of external light. Therefore, the area in which the image of dark objects is taken may be excluded from the calculation target. In addition, the selection of the out-of-calculation pixels 14d may be determined by setting a specified threshold value, e.g., by excluding from the calculation target the pixels 14 whose brightness data (Y-value) obtained by the image sensor 11 are equal to or lower than the 50-th level out of the 256 levels in total. The calculation unit 13 finds the brightness of the detection range 15 by executing a calculation only for the selected pixels 14c among the total pixels falling within the detection range 15.

In the brightness detection system of the present embodiment set forth above, a calculation is executed only for the pixels 14c whose brightness data are equal to or greater than a predetermined value. In other words, a calculation is performed with respect to the pixels 14c falling within the area affected by external light but no calculation is executed for the pixels 14d falling outside that area. This makes it possible to achieve a balance between the reduction of calculated data quantity and the maintenance of calculation accuracy required in correcting external light.

The present invention is not limited to the embodiments described above but may be modified in many different forms without departing from the scope of the invention defined in the claims. For example, the first embodiment and the second embodiment may be combined together, in which case the calculation target pixels are selected in an equal interval within the specific area containing the pixels whose brightness data is equal to or greater than a predetermined value.

## Claims

1. A brightness detection system comprising:
an image sensor for generating imaging data formed of pixels; and
a calculation unit for finding the brightness of an object by calculating the imaging data, wherein the calculation unit is designed to execute a calculation only for selected arbitrary pixels among the pixels of the imaging data and falling within a preliminarily designated brightness detection range.

2. The brightness detection system of claim 1, wherein the selected arbitrary pixels are so selected as not to adjoin to one another on their sides

3. The brightness detection system of claim 1, wherein the selected arbitrary pixels have brightness data equal to or greater than a predetermined value.
